# EUROPÄISCHE PATENTANMELDUNG

(11) **EP 1 035 090 A1**
(43) Veröffentlichungstag der Anmeldung: **13.09.2000**
(21) Anmeldenummer: 00101134.5
(22) Anmeldetag: 21.01.2000
(51) Int. Cl.: C04B 40/06, C04B 22/16, C04B 24/06, F16B 13/14

(54) **Verbundmasse zur Verankerung eines Befestigungselements in einem Untergrund**

(30) Priorität: 12.03.1999 DE 19911038
(71) Anmelder: fischerwerke Artur Fischer GmbH & Co. KG, 72178 Waldachtal (DE)
(72) Erfinder: Weber, Christian, 79312 Emmendingen (DE); Grün, Jürgen, 79268 Bötzingen (DE); Schätzle, Joachim, Dr., 79341 Kenzingen (DE); Kiefer, Andreas, 79235 Vogtsburg (DE)

(57) **Zusammenfassung**

Um die vollständige Benetzung der Bohrlochwandung mit der aushärtbaren Masse zu erreichen, ist es vorgesehen, in die Verbundmasse eine bestimmte Menge von einer organischen oder einer anorganischen Säure einzusetzen.

## Beschreibung

Die Erfindung betrifft eine Verbundmasse zur Verankerung eines Befestigungselements in einem Untergrund, wobei die eine Komponente eine Harzkomponente und die zweite eine Härterkomponente ist. Eine derartige Verbundmasse ist in der EP 199671 beschrieben. Die Masse besteht aus radikalisch härtbarem Harz und Härter, wobei die beiden Komponenten vor dem Verarbeiten getrennt in Form einer Patrone oder einer Kartusche untergebracht sind. Die bekannte Masse weist den Nachteil auf, daß sie keine gute Benetzung des Bohrlochs sichert, so daß die Verankerung eines Befestigungselements im Bohrloch mit reduzierten Auszugswerten in Kauf genommen werden muß. Um eine ausreichende Verankerung eines Befestigungselements zu erreichen, ist es notwendig, daß die aushärtbare Verbundmasse eine gute Benetzung der Bohrlochwandung und somit die Haftung der Masse zur Bohrlochwandung sichert.

Die Benetzung der Bohrlochwandung mit der aushärtbaren Verbundmasse ist in vielen Fällen davon abhängig, wie sorgfältig der Monteur das Bohrloch gereinigt hat. Es zeigte sich, daß der an der Bohrlochwandung verbleibende Bohrstaub an der Grenzfläche zur Bohrlochwandung von dem Mörtel aufgenommen wird, so daß an dieser Stelle eine dünne Trennschicht gebildet wird, die zur Herabsetzung der Auszugswerte führt.

Der Erfindung liegt die Aufgabe zugrunde, eine Mörtelmasse bereitzustellen, die eine vollständige Benetzung der Bohrlochwandung ermöglicht und hohe Auszugswerte sichert.

Erfindungsgemäß wird diese Aufgabe durch die im Anspruch 1 angegebenen Merkmale gelöst.

Es hat sich unerwartet gezeigt, daß die Zugabe von Säuren zur Verbundmasse die Benetzung der Bohrlochwandung mit der aushärtbaren Masse und die Haftung des Mörtels zur Bohrlochwandung erhöht.

### Beispiel 1

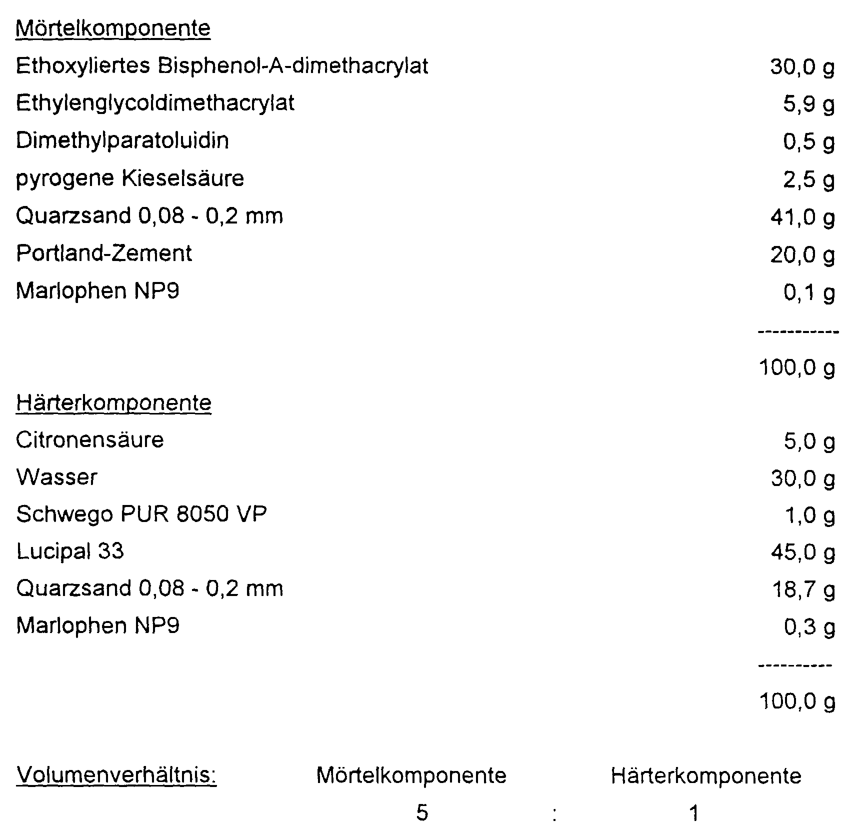

### Auszugsversuch

Baustoff: Beton B25
Betondruckfestigkeit: 27,4 N/mm²
Ankerstange: 12x160 mm; 8.8
Bohrdurchmesser: 14 mm
Bohrtiefe: 110 mm
Verankerungstiefe: 110 mm
Bohrlochreinigung: Bohrmehl ausblasen
Aushärtezeit: 1 Stunde
Auszugswert: 49,2 kN
Versagensart: Mörtelabscheren zur Ankerstange

### Beispiel 2

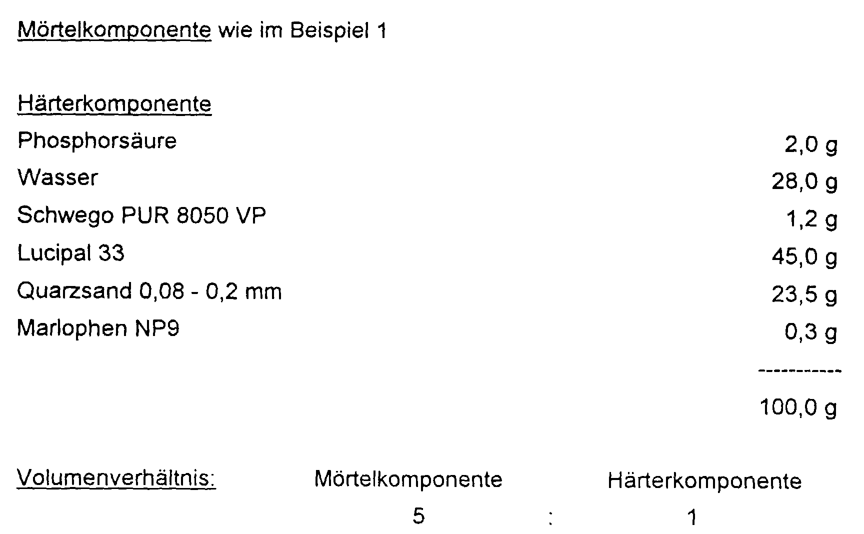

### Auszugsversuch

Baustoff: Beton B25
Betondruckfestigkeit: 28,2 N/mm²
Ankerstange: 12x160 mm; 8.8
Bohrdurchmesser: 14 mm
Bohrtiefe: 110 mm
Verankerungstiefe: 110 mm
Bohrlochreinigung: Bohrmehl ausblasen
Aushärtezeit: 1 Stunde
Auszugswert: 47,1 kN
Versagensart: Mörtelabscheren zur Ankerstange

### Beispiel 3

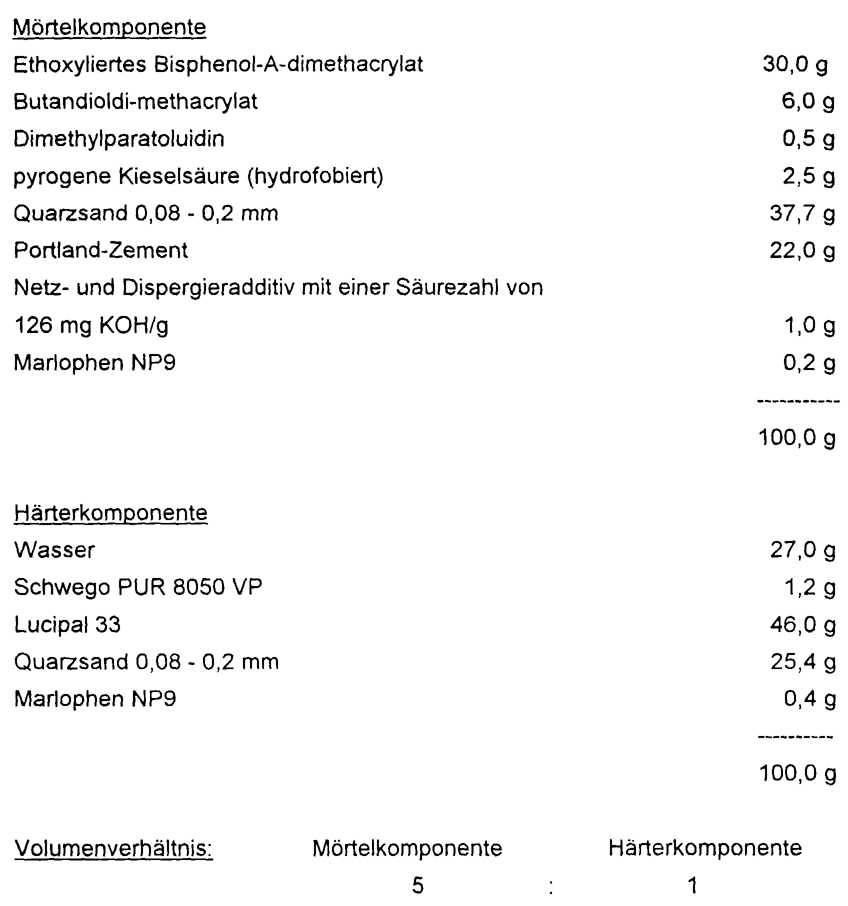

### Auszugsversuch

Baustoff: Beton B25
Betondruckfestigkeit: 28,2 N/mm²
Ankerstange: 12x160 mm; 8.8
Bohrdurchmesser 14 mm
Bohrtiefe: 110 mm
Verankerungstiefe: 110 mm
Bohrlochreinigung: Bohrmehl ausblasen
Aushärtezeit: 1 Stunde
Auszugswert: 47,8 kN
Versagensart: Mörtelabscheren zur Ankerstange

### Vergleichsbeispiel

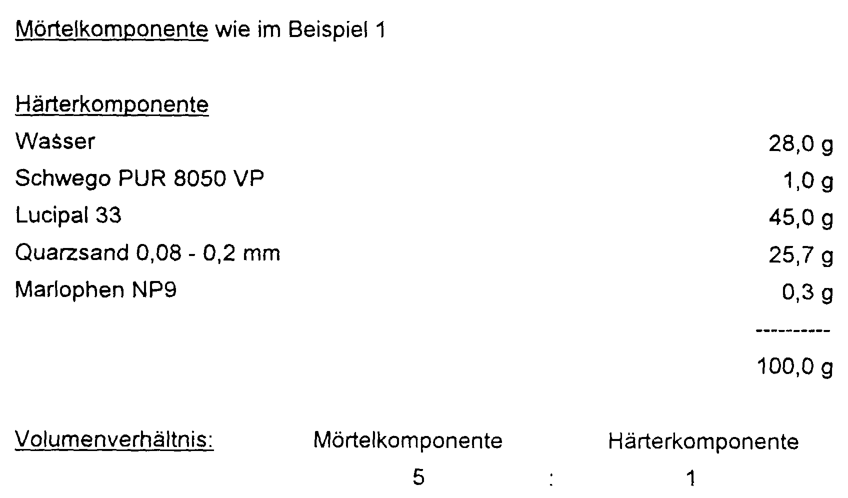

### Auszugsversuch

Baustoff: Beton B25
Betondruckfestigkeit; 27,4 N/mm²
Ankerstange: 12x160 mm; 8.8
Bohrdurchmesser: 14 mm
Bohrtiefe: 110 mm
Verankerungstiefe: 110 mm
Bohrlochreinigung: Bohrmehl ausblasen
Aushärtezeit: 1 Stunde
Auszugswert: 39,8 kN
Versagensart: Verbundbruch zum Beton

## Patentansprüche

1. Verbundmasse zur Verankerung eines Befestigungselements in einem Bohrloch, die aus einer Harz- und Härterkomponente sowie Füllstoffen besteht, **dadurch gekennzeichnet,** daß die Verbundmasse einen Anteil einer Säure aufweist.

2. Verbundmasse nach Anspruch 1, **dadurch gekennzeichnet,** daß die Verbundmasse einen Anteil von anorganischen Säuren aufweist.

3. Verbundmasse nach Anspruch 1, **dadurch gekennzeichnet,** daß die Verbundmasse einen Anteil von organischer Säure aufweist.

4. Verbundmasse nach Anspruch 1, **dadurch gekennzeichnet,** daß die Zugabe von Säure im Bereich von 0,01 bis 5 %, gerechnet auf die gesamte Menge der Verbundmasse, liegt.

5. Verbundmasse nach Anspruch 1, **dadurch gekennzeichnet,** daß als Säure die Citronensäure oder dergleichen eingesetzt wird.

6. Verbundmasse nach Anspruch 1, **dadurch gekennzeichnet,** daß als Säure Phosphorsäure oder dergleichen eingesetzt wird.

7. Verbundmasse nach Anspruch 1, **dadurch gekennzeichnet,** daß die Säure zur Härterkomponente zugegeben wird.

8. Verbundmasse nach Anspruch 1, **dadurch gekennzeichnet** daß die Säure zum Mörtel zugegeben wird.
